# EUROPEAN PATENT APPLICATION

(11) **EP 3 445 095 A1**
(43) Date of publication of application: **20.02.2019**
(21) Application number: 18188993.2
(22) Date of filing: 14.08.2018
(51) Int. Cl.: H04W 48/20, H04W 88/04, H04W 88/06

(54) **AUXILIARY BASE UNIT WITH INDEPENDENT WIRELESS AUGMENTATION**

(30) Priority: 15.08.2017 US 201762545828 P; 30.04.2018 US 201815967178
(71) Applicant: Ninety7 Inc., Wheaton IL 60189 (US)
(72) Inventor: BRENNAN, Kevin, Wheaton, IL 60189 (US)
(74) Representative: Hanna Moore + Curley

(57) **Abstract**

Methods and apparatus are disclosed for an auxiliary base unit with independent wireless augmentation. An example auxiliary base unit for a wireless media device includes a body defining a cavity configured to house the wireless media device and a communication module configured to generate a wireless hotspot. The communication module includes a cellular transceiver for cellular communication and a wireless local area network (WLAN) transceiver to generate the wireless hotspot for communication with the wireless media device. The example auxiliary base unit also includes a power module configured to charge the communication module.

## Description

### Technical Field

The present invention relates generally to devices for generating wireless hotspots, and more specifically, to auxiliary devices that support a primary device with both auxiliary power, remote internet connectivity and other enhancement capabilities.

### Background of the Invention

There is presently rapid expansion of household controls that utilize a home's internet connection via wireless fidelity ("Wi-Fi"). Such items include devices to control the thermostat, lighting, to open or close doors or windows, and to provide a variety of information upon verbal request from a user. These devices gather the information, and connect to other controls within the home, via a wireless local area network supported by, for example, a home router. Some of them may be controlled remotely, such as via a software application housed within a smart phone or similar device that has an independent cellular connection. However, the devices receive these inputs through the home router, and are limited in range to the Wi-Fi connection provided by that router. Moreover, the setup to cause such a device to associate with that network or Wi-Fi connection oftentimes is error prone.

While the utility of some such Wi-Fi devices is directly tied to (and limited to) the home environment that is fully covered by the router and the Wi-Fi network, other Wi-Fi devices could have similar utility outside of the home environment. For example, a device that plays music or provides information from the Internet or answers questions from stored memory and learned calculations could benefit from the ability to operate seamlessly when removed from the range of the home router.

### Summary of the Invention

The present invention improves on existing wireless media devices and informational systems by allowing the functionality delivered by wireless media devices for use in a wireless local area network (WLAN) based environments to extend beyond the local area. The auxiliary device of the present invention provides not only various auxiliary features, such as enhanced volume, extended battery life and physical protection, it also generates a wireless hotspot that can be synched with the wireless media device via a control device to allow full capability and internet access to the wireless media device in the absence of the traditional WLAN home router. In some embodiments, the wireless media device will be configured to detect a primary WLAN and utilize it unless it is not present. When the primary WLAN becomes unavailable, the wireless media device will convert to a secondary WLAN network broadcast by the auxiliary device. Other embodiments and features will be understood in connection with the below figures and description.

An example disclosed auxiliary base unit for a wireless media device includes a body defining a cavity configured to house the wireless media device and a communication module configured to generate a wireless hotspot. The communication module includes a cellular transceiver for cellular communication and a wireless local area network (WLAN) transceiver to generate the wireless hotspot for communication with the wireless media device. The example disclosed auxiliary base unit also includes a power module configured to charge the communication module.

In some examples, the cavity defined by the body is cylindrical and provides access to controls on a top surface of the wireless media device when the wireless media device is housed in the cavity. In some examples, a portion of the body includes a mesh body to facilitate projection of audio signals from the wireless media device when the wireless media device is positioned within the cavity defined by the body.

Some examples further include an auxiliary speaker to supplement the wireless media device. Some such examples further include an auxiliary port that is electrically coupled to the auxiliary speaker and configured to electrically couple to the wireless media device when the wireless media device is positioned within the cavity. The auxiliary speaker supplements the wireless media device when the auxiliary port is electrically coupled to the wireless media device.

In some examples, the WLAN transceiver is a Wi-Fi transceiver and the wireless hotspot is a Wi-Fi hotspot.

Some examples further include a power connector that is electrically coupled to the power module and configured to electrically couple to the wireless media device when the wireless media device is positioned within the cavity. In some examples, the power module includes a power cord and a rechargeable battery.

In some examples, to generate the wireless hotspot, the cellular transceiver communicatively connects to a remote cell tower and the WLAN transceiver broadcasts a WLAN signal.

Some examples further include a controller configured to authorize the wireless media device to access the wireless hotspot in response to receiving a code from a mobile device on behalf of the wireless media device. In some such examples, the wireless hotspot generated by the WLAN transceiver facilitates wireless communication for the wireless media device that is independent of communication with the mobile device.

Some examples further include a wired data connector that is communicatively coupled to the communication module and is configured to couple to the wireless media device when the wireless media device is housed in the cavity. In some examples, the WLAN transceiver generates the wireless hotspot upon receiving an activation signal via a button.

An example disclosed auxiliary base unit for a wireless media device includes a body defining a cavity configured to house the wireless media device, a communication module configured to generate a wireless hotspot, a power module configured to charge the communication module, and a controller. The controller is configured to monitor, via the communication module, for a primary WLAN source of the wireless media device and generate, via the communication module, the wireless hotspot in response to not detecting the primary WLAN source of the wireless media device. The controller also is configured to communicate with the wireless media device via the wireless hotspot.

An example disclosed computer storage medium comprising instructions which, when executed, cause an auxiliary base unit that is configured to house a wireless media device to activate, via a processor, a cellular transceiver of the auxiliary base unit for communication with a cellular network via a remote cell tower and activate, via the processor, a wireless local area network (WLAN) transceiver for WLAN communication. The instructions which, when executed, also cause the auxiliary base unit to monitor, via the WLAN transceiver, for a primary WLAN source of the wireless media device and generate, via the WLAN transceiver, a wireless hotspot in response to not detecting the primary WLAN source of the wireless media device. The instructions which, when executed, also cause the auxiliary base unit to communicate with the wireless media device via the wireless hotspot.

In some examples, the instructions cause the WLAN transceiver to generate the wireless hotspot further in response to receiving an activation signal via at least one of a button of the auxiliary base unit and a mobile device communicatively coupled to the WLAN transceiver.

In some examples, the instructions further cause the auxiliary base unit to authorize the wireless media device to access the wireless hotspot in response to receiving a code from a mobile device on behalf of the wireless media device.

In some examples, the instructions further cause the auxiliary base unit to power the wireless media device via a power cord of the auxiliary base unit when the wireless media device is electrically coupled to a power connector of the auxiliary base unit and the power cord is plugged into a socket. In some such examples, the instructions further cause the auxiliary base unit to power the wireless media device via a rechargeable battery of the auxiliary base unit when the wireless media device is electrically coupled to a power connector of the auxiliary base unit, the power cord is not plugged into the socket, and a charge level of the rechargeable battery is greater than that of the wireless media device.

In some examples, the instructions further cause the auxiliary base unit to deactivate the cellular transceiver and the WLAN transceiver in response to the WLAN transceiver detecting another WLAN source for the wireless media device.

An example disclosed auxiliary base unit for use with a Wi-Fi capability device includes a battery housing containing a rechargeable auxiliary power storage cell, a Wi-Fi device housing, a power plug in connection with the power storage cell for electrical connection to the Wi-Fi device when the Wi-Fi device is placed in the Wi-Fi device housing, a cellular communications module in wireless communication with a remote cell tower, and an antenna for broadcasting a wireless hotspot. The auxiliary base unit is configured to wirelessly connect to the Wi-Fi capable device via the wireless hotspot to send and receive data. Some examples further include a control module for detecting the presence of a primary LAN network and, in response to such detection, disabling the cellular communications module.

Another example disclosed auxiliary base unit for use with a Wi-Fi capability device includes a battery housing containing a rechargeable auxiliary power storage cell, a Wi-Fi device housing, a power plug in connection with the power storage cell for electrical connection to the Wi-Fi device when the Wi-Fi device is placed in the Wi-Fi device housing, a data plug in connection with a processor of the Wi-Fi device for transmitting and receiving data from the Wi-Fi device when the Wi-Fi device is placed in the Wi-Fi device housing, and a cellular communications module in wireless communication with a remote cell tower. The auxiliary base unit is configured to provide both data and power to the Wi-Fi device when a primary LAN network of the Wi-Fi device is not in range or available.

### Brief Description of the Drawings

The present invention can be better understood with reference to the following figures. The components in the figures are not necessarily to scale, emphasis instead being placed upon clearly illustrating the principles of the present invention. In the figures, like reference numerals designate corresponding parts throughout the several views.
FIG. 1 is side view of an exemplary auxiliary base unit in accordance with an embodiment of the present invention.
FIG. 2 is a side elevated view of an exemplary wireless media device in accordance with the present invention that is positioned above a housing of the auxiliary base unit of FIG. 1.
FIG. 3 is a schematic diagram showing communication interactions between the wireless media device of FIG. 2 in a traditional WLAN environment.
FIG 4 is a schematic diagram showing external communication flow between exemplary components of a communications system in which the auxiliary base system of FIG. 1 is used to assist the wireless media device of FIG. 2 in communications that are remote from the traditional WLAN environment of FIG. 3.
FIG. 5 is a block diagram showing internal communication flow within the auxiliary base unit of FIG. 1.
FIG. 6 is a flow chart showing steps associated with setting up the auxiliary base unit of FIG. 1 to provide remote communications for the wireless media device of FIG. 2.
FIG. 7 is a flow chart showing steps associated operating the wireless media device of FIG. 2 in tandem with the auxiliary base unit of FIG. 1 remote from a primary WLAN.
FIG. 8 is a side view of another exemplary auxiliary base unit in accordance with an embodiment of the present invention.

### Detailed Description

The description that follows describes, illustrates and exemplifies one or more particular embodiments of the present invention in accordance with its principles. This description is not provided to limit the invention to the embodiments described herein, but rather to explain and teach the principles of the invention in such a way to enable one of ordinary skill in the art to understand these principles and, with that understanding, be able to apply them to practice not only the embodiments described herein, but also other embodiments that may come to mind in accordance with these principles. The scope of the present invention is intended to cover all such embodiments that may fall within the scope of the appended claims, either literally or under the doctrine of equivalents. Further, as used herein, the terms "module" and "unit" refer to hardware with circuitry to provide communication, control and/or monitoring capabilities. A "module" and a "unit" may also include firmware that executes on the circuitry.

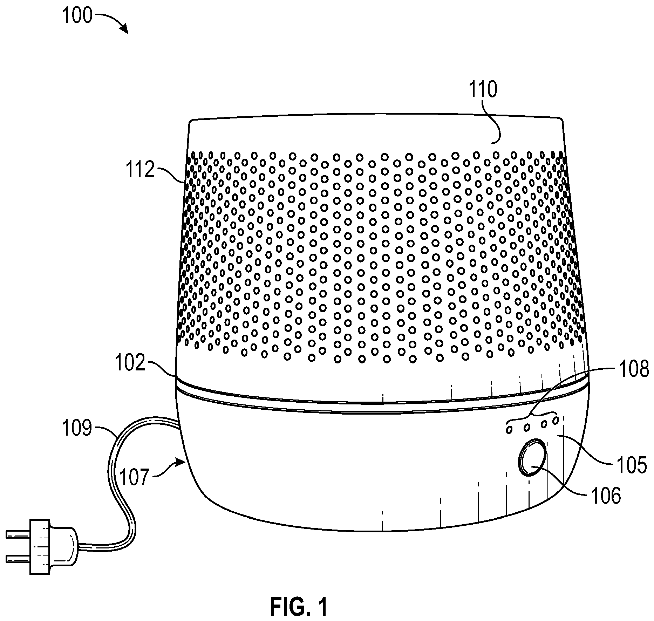

FIG. 1 illustrates a side view of an exemplary auxiliary base unit 100, in accordance with a particular embodiment of the present invention. The auxiliary base unit 100 (which may also be called an "auxiliary unit," an "auxiliary device" and a "base unit" herein), may take a variety of forms. Its primary characteristic and function is to provide auxiliary capabilities to a wireless media device (which may also be called a "primary device" and a "portable device" herein) (e.g., a WLAN device, a Wi-Fi device) such as a wireless speaker (which may also be called a "primary speaker" and a "portable speaker" herein) (e.g., a "WLAN speaker," a "Wi-Fi" speaker,"), as explained further below. These capabilities may include physical protection, volume enhancement, auxiliary battery storage or memory storage, enhanced lighting or other features. In addition to such possible capabilities, the auxiliary base unit 100 in accordance with the present invention has a cellular communications module that allows it to connect to the Internet and to send and receive data to a remote server or cellular communications access point via a long-range wireless connection.

As used herein, wireless data connections are described as short-range (e.g., wireless local area networks (WLANs) such as Wi-Fi, wireless personal area networks (WPANs) such as Bluetooth) or long-range (e.g., cellular networks such as Long Term Evolution (LTE), wide area networks (WANs) such as Near Field Communication (NFC)). Short-range wireless connections utilize a nearby internet router (or router / modem combination) that broadcast a short-range wireless signal (e.g., a wireless fidelity signal) in its local physical vicinity. Depending on its power and possible re-transmission nodes working in combination with it, the router typically controls the area in and around a wired, physical location, such as a home or office building. The router itself is typically hard-wired into a communications network (e.g., the Internet). An example of a short-range connection would be a bluetooth speaker or a cell phone connected to a Wi-Fi network.

In contrast, a long-range wireless connection does not use a router, but rather connects directly to the communications network via a wireless data connection point, such as a cell tower. An example of a long-range connection would be a cell phone that is directly in communication with a cell tower upon moving outside of the range or is otherwise not connected to a Wi-Fi network hosted by a router. Though different, the hardware and software for both short-range transceivers and long-range transceivers are known. It is also known that a device enable to communicate via a long-range connection (such as a smart phone) may temporarily act as a wireless data access point and generate its own WLAN, essentially serving as a short-range router. This is referred to as a "mobile hotspot," and is described, for example, in U.S. Pat. 9,078,137. As used herein, a "wireless hotspot," a "auxiliary hotspot," and a "hotspot" refer to a location at which a device (e.g., a router, a smart phone, an auxiliary base unit) generates a wireless network (e.g., a WLAN) to provide a wireless Internet connection for other nearby device(s). As used herein, a "mobile hotspot" refers to a temporary location at which a mobile device (e.g., a smart phone, an auxiliary base unit) generates a wireless network (e.g., a WLAN) to provide a wireless Internet connection for other nearby devices.

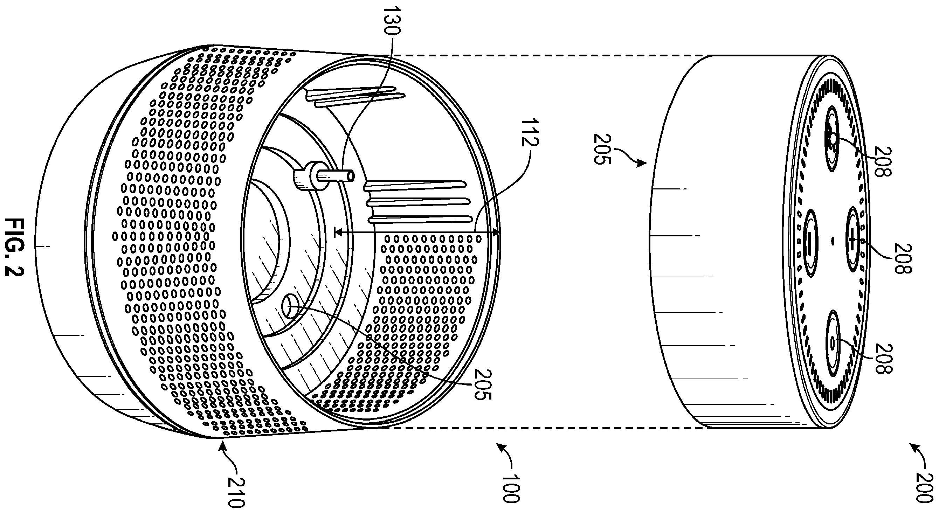

Returning to the auxiliary base unit 100 of FIG. 1, the auxiliary base unit 100 includes a body 102 that has a battery housing 105 and a primary device housing 110 (e.g., a WLAN device housing, a Wi-Fi device housing). The battery housing 105 may be of any shape or size. In the illustrated example, the battery housing 105 provides a stable platform upon which to set the auxiliary base unit 100 to securely hold a wireless media device (e.g., a portable wireless speaker 200 of FIG. 2). Further, the battery housing 105 is of suitable size to house a battery 107 (which may also be called a "rechargeable battery" and an "auxiliary power unit" herein) that can simultaneously power the operations of the auxiliary base unit 100, power the operations of the wireless media device, and/or recharge a battery of the wireless media device. By positioning the battery 107 within the battery housing 105 at a base of the body 102 of the auxiliary base unit 100, the weight of the battery 107 adds to the stability of the auxiliary base unit 100. Further, in the illustrated example, a power cord 109 extends from the battery housing 105. The power cord 109 is configured to plug into an electrical outlet to simultaneously power the operations of the auxiliary base unit 100, power the operations of the wireless media device, and/or recharge a battery of the wireless media device. That is, both the auxiliary base unit 100 and the wireless media device may be powered by the battery 107 and/or the power cord 109 of the battery housing 105. In the illustrated example, the battery housing 105 also includes a power button 106 that is built into an external surface of the battery housing 105. The power button 106 enables a user to manually power on or off the auxiliary base unit 100. LED lights 108 of the battery housing 105 of the illustrated example indicate different functions and states of the auxiliary base unit 100, such as, for example, a power level remaining within the battery 107 and/or the power level of a battery of the wireless media device to be recharged. In other embodiments, the battery housing 105 may also feature other visual readout information, such as sound volume or a measurement of the bandwidth available via a given cellular connection.

Also housed within the battery housing 105 of the illustrated example, as further explained below, is a communication module 150, control circuitry 155, a long-range transceiver 152 (which may also be called a "long-range antenna" herein), and a short-range transceiver 154 (which may also be called a "short-range antenna" and a "hotspot antenna" herein) configured to broadcast a mobile hotspot (e.g., a Wi-Fi hotspot). For example, the long-range transceiver 152 includes a cellular transceiver and the short-range transceiver 154 includes a WPAN transceiver such as a Wi-Fi transceiver. In some embodiments, the battery housing 105 may also accommodate on-board auxiliary memory.

The primary device housing 110 of the illustrated embodiment includes a mesh body 112 formed of metal mesh that allows for the clear passage of sound from the wireless media device when the wireless media device is positioned received by the primary device housing 110. The primary device housing 110 can take on a variety of shapes so as to accommodate a variety of wireless media devices. Moreover, the primary device housing 110 can be configured to accept wireless media devices of various different shapes and sizes. However, it is preferred that there is a reasonably snug fit between the wireless media device and the primary device housing 110 of the auxiliary base unit 100 when mated together to improve the data and/or power connection between the wireless media device and the primary device housing 110.

As shown in FIG. 2, the primary device housing 110 is hollowed out to produce a cavity 112 for receiving a wireless media device, such as a portable wireless speaker 200. As used herein, a "wireless media device" refers to a device that provides media for a user and includes wireless communication hardware to enable the device to receive input signals from other device(s) (e.g., a smart phone, a home computer, etc.) via wireless communication network(s) (e.g., WPANs,, WLANs, WANs). As used herein, a "wireless speaker" refers to a device that includes a speaker and wireless communication hardware to enable the device to receive input signals from other device(s) (e.g., a smart phone, a home computer, etc.) via wireless communication network(s) (e.g., WPANs,, WLANs, WANs). As used herein, a "portable wireless speaker" refers to a compact wireless speaker that includes a battery (e.g., rechargeable battery) to enable the speaker to emit audio signals when not plugged into an electrical source (e.g., an electrical socket). As used herein, a "smart speaker" refers to a wireless speaker that includes voice command capabilities to enable a user to control functionality of the speaker via voice commands. Example smart speakers may utilize wireless communication (e.g., WPANs,, WLANs, WANs) to access information from internal and/or external network(s) (e.g., the Internet). Example smart speakers may utilize wireless communication with network(s) to perform non-speaker functions (e.g., turning off lights in a room, purchasing a product via the Internet, etc.) upon receiving a voice command to do so from the user. As used herein, a "portable smart speaker" refers to a compact smart speaker that includes a battery (e.g., rechargeable battery) to enable the speaker to emit audio signals when not plugged into an electrical source (e.g., an electrical socket).

It will be understood that, while portable wireless speaker 200 is round and is shaped to be received within the cavity 112 that is round, the portable wireless speaker 200 could essentially have any solid shape that is conducive for being mounted within the auxiliary base unit 100 such that a power connection is made between the portable smart speaker 200 and the auxiliary base unit 100. In the illustrated embodiment, the auxiliary base unit 100 includes a power plug 130 (which may also be called a "power connector" herein) that is positioned to extend up into a power port 205 of the portable wireless speaker 200 when the portable wireless speaker 200 is secured within cavity 112 of the auxiliary base unit 100. The power plug 130 is electrically connected to the battery 107 and the power cord 109 of the battery housing 105 to enable the auxiliary base unit 100 to power the portable wireless speaker 200 when the portable wireless speaker 200 is housed within the cavity 112 of the auxiliary base unit 100.

In the illustrated embodiment, the portable wireless speaker 200 is configured to have audio input and output functionality. Accordingly, it is an important feature of the auxiliary base unit 100 to enhance, rather than impede, the detection and broadcast of sound when the portable wireless speaker 200 is housed by the auxiliary base unit 100. The illustrated auxiliary base unit 100 enhances the transmission and receipt of audio signals by including one or more additional acoustical chambers 140, in connection with the mesh body 112 of the primary device housing 110, which facilitate the passage of sound waves. In the illustrated example, the auxiliary base unit 100 also includes an auxiliary speaker 210 to increase and/or supplement the sound output of the portable wireless speaker 200, such as for playing music or broadcasting a game or production over the Internet. Further, the auxiliary base unit 100 of the illustrated example includes an auxiliary port 215 (which may also be called a "wired data connector" herein) to receive an auxiliary connector of the portable wireless speaker to link communicatively connect the speaker of the portable wireless speaker 200 and the auxiliary speaker 210 of the auxiliary base unit 100. For example, the auxiliary speaker 210 supplements the portable wireless speaker 200 when the auxiliary port 215 is electrically coupled to the portable wireless speaker 200.

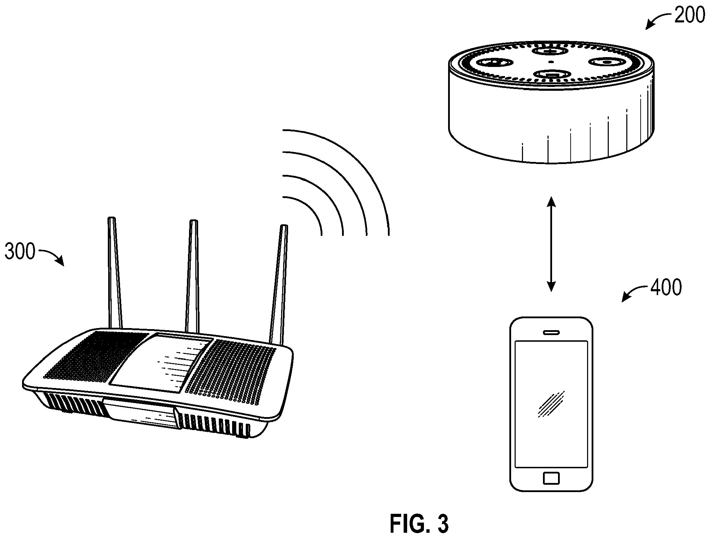

In some examples, the portable wireless speaker 200 has its own manual control devices 208 for volume, lighting, power, etc. Further, the portable wireless speaker 200 has its own audio output device (e.g., a speaker). Additionally or alternatively, other portable media devices configured to be housed by the auxiliary base unit 100 may not include its own speaker such that it relies upon the auxiliary speaker 210 of the auxiliary base unit 100 to emit sound. The portable wireless speaker 200 also has a transceiver for wireless connection to a WLAN network (e.g., a Wi-Fi network) and/or a WPAN network (e.g., a Bluetooth network). In a traditional setting, such as that depicted in FIG. 3, a router 300 is located within a nearby vicinity of the portable wireless speaker 200. The router 300 broadcasts a wireless signal detectable by the portable wireless speaker 200 for connection to a wireless network (e.g., a WLAN such as a Wi-Fi network). This may, in some cases, be facilitated by a control device, such as a mobile device 400 (which may also be called a "control device" herein). For example, the mobile device 400 may include special application software for interacting with the portable wireless device to connect the portable wireless device 200 to a wireless network of the router 300 when the portable wireless device 200 is within range of the router 300. The mobile device 400 can take a variety of forms. As depicted in FIG. 3, it the mobile device 400 is a common smart phone that is configured to interact with the portable wireless device 200 and the router 300. Additionally or alternatively, the mobile device 400 is a tablet, a smart watch, a wearable, and/or any other portable device configured to have a processor, a memory, a user interface, and a control application designed to interact with and control the portable wireless speaker 200. For example, the mobile device 400 may be used to associate the portable wireless speaker 200 with a particular user account for making purchases through the Internet, etc. The mobile device 400 can also be used to detect nearby wireless networks (e.g., Wi-Fi networks) and enter credentials (e.g., a service set identifier and a corresponding password) required to connect the portable wireless speaker 200 to the desired network.

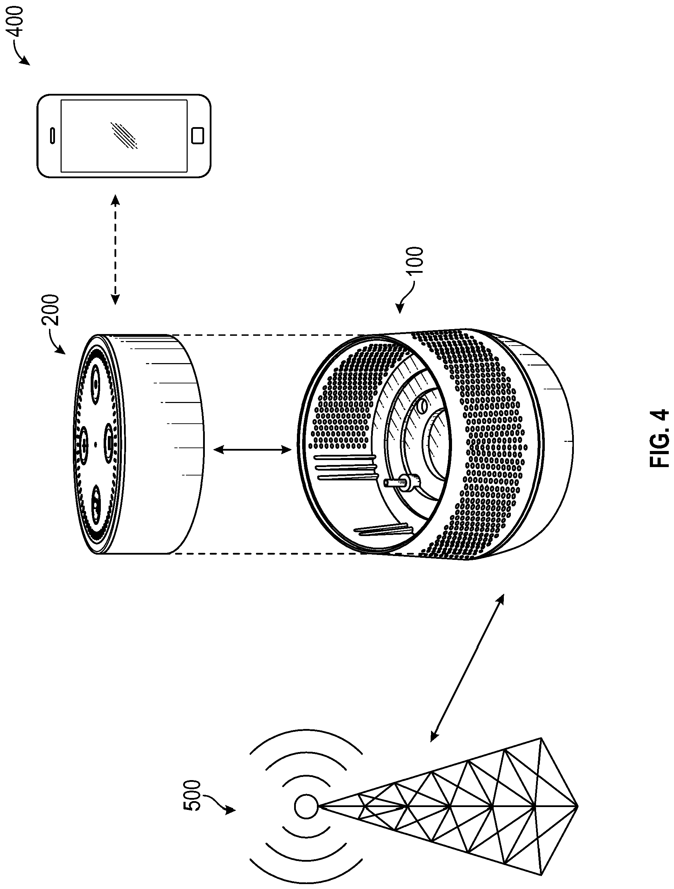

In accordance with the present invention, when a traditional WLAN (e.g., a home router) is not available to facilitate connection of the portable wireless speaker 200 to a remote information source (e.g., the Internet), the auxiliary base unit 100 is configured to provide the connection directly. This is best explained in association with FIG. 4. As shown in FIG. 4, the auxiliary base unit 100 includes a communication module 150 that is similar, for example, to that found in a common cell phone (e.g., the control device 400). For example, the communication module 150 includes the long-range transceiver 152 that may operate using a 2G GSM, 3G UTMS, or 4G LTE chip, using wireless CDMA and/or whatever cellular wireless mobile telecommunications protocol is standardized in the area. Equipped with this feature, the auxiliary base unit 100 can effectively replace the router 300 and act as the gateway to the Internet for the portable wireless speaker 200 via wireless connection a nearby cell tower 500.

In some examples, the portable wireless speaker 200 may include a wired data connection such as an auxiliary connector. If equipped with such a wired data connection (not shown), the portable wireless speaker 200 can send and receive information directly to the auxiliary base unit 100 via the wired connection (e.g., via the auxiliary port 200 when the portable wireless speaker 200 is properly installed within the primary device housing 110). Alternatively or in addition, the portable wireless speaker 200 is configured to work with a wireless mobile hotspot broadcast by the short-range transceiver 154 (e.g., an antenna) of the auxiliary base unit 100. In this configuration, the control device 400 may need to initially recognize the hotspot broadcast by the auxiliary base unit 100 and enter a service set identifier and a corresponding password to enable the portable wireless speaker 200 to connect to the hotspot, at least during initial setup. Notably, while the control device 400 may be equipped with the capability to broadcast a mobile hotspot, the control device 400 cannot "recognize itself' and connect to its own hotspot. For instance, to connect the portable wireless speaker 200 to a hotspot of the auxiliary base unit 100, (i) the portable wireless speaker 200 initially broadcasts a temporary hotspot via a transceiver to establish communication with the control device 400, (ii) the control device 400 sends, via the temporary hotspot, a service set identifier and a password associated with a current session of the hotpot of the auxiliary base unit 100, (iii) the portable wireless speaker 200 relays the service set identifier and corresponding password to the auxiliary base unit 100 for authentication, (iv) the portable wireless speaker 200 disconnects its temporary hotspot to free up its transceiver, and (v) the portable wireless speaker 200 connects to the current session of the hotspot of the auxiliary base unit 100 via its transceiver. If the control device 400 attempts to connect the portable wireless speaker 200 to its own hotspot, a transceiver of the control device 400 is unable to simultaneously (1) broadcast a current session of a hotspot and (2) communicate the service set identifier and corresponding password via the temporary hotspot of the portable wireless speaker 200. Thus, the mobile device 400 is unable to facilitate the portable wireless speaker 200 in connecting to a hotspot that is broadcast by itself. Accordingly, having only the portable wireless speaker 200 and the control device 400 may not be sufficient to connect the portable wireless speaker 200 to a secondary WLAN (e.g., a mobile hotspot) away from a primary WLAN (e.g., of the router 300). In such cases, a second device is required, and this need is met by the auxiliary base unit 100.

Furthermore, once the portable wireless speaker 200 is connected to the mobile hotspot broadcast by the auxiliary base unit 100, the control unit 400 is no longer required to maintain the communicative connection of the auxiliary base unit 100. That is, the hotspot generated by the auxiliary base unit 100 facilitates wireless communication for the portable wireless speaker 200 that is independent of communication with the control device 400. For example, the portable wireless speaker 200 is configured to remain communicatively coupled to a network (e.g., the Internet) via the mobile hotspot of the auxiliary base unit 100 after the control device 400 disconnects from the same mobile hotspot. In some examples, connection to the hotspot of the auxiliary base unit 100 can be performed automatically upon recognition of the availability of the hotspot and/or upon recognition of the unavailability of the primary WLAN source (e.g., the home base network associated with the router 300).

In some embodiments, the control circuitry 155 of the auxiliary base unit 100 is configured to enable and/or disable the communication module 150 and/or the short-range transceiver 154. Operating long-range and/or short-range communication requires more power and data usage, so it is optimal not to leave them on all the time. Rather, the control circuitry 155 is configured to activate the long-range communication and/or the short-range communication when it detects a certain condition. In some examples, this condition is a weakness or absence of the primary WLAN network broadcast by the router 300. Alternatively or in addition, the condition is a disruption in the performance of the portable wireless speaker that is unrelated to a power condition of the portable wireless speaker 200.

For example, if the power level of the portable wireless speaker 200 is low, the auxiliary base unit 100 is configured to begin a recharge cycle to provide power to the portable wireless speaker 200 when the portable wireless speaker 200 is electrically coupled to the power plug 130 of the auxiliary base unit 100. If the auxiliary base unit 100 detects a disruption in performance that is unrelated to a low power condition, it may be because the portable wireless speaker 200 has lost suitable connection to the primary WLAN network. In this case, the control circuitry 155 of the auxiliary base unit 100 activates the communication module 150 to broadcast an auxiliary wireless hotspot via the short-range transceiver 154. Whether connect to the power plug 130 or not, the portable wireless speaker 200 is configured to continue to operate through the new data connection with the auxiliary base unit 100.

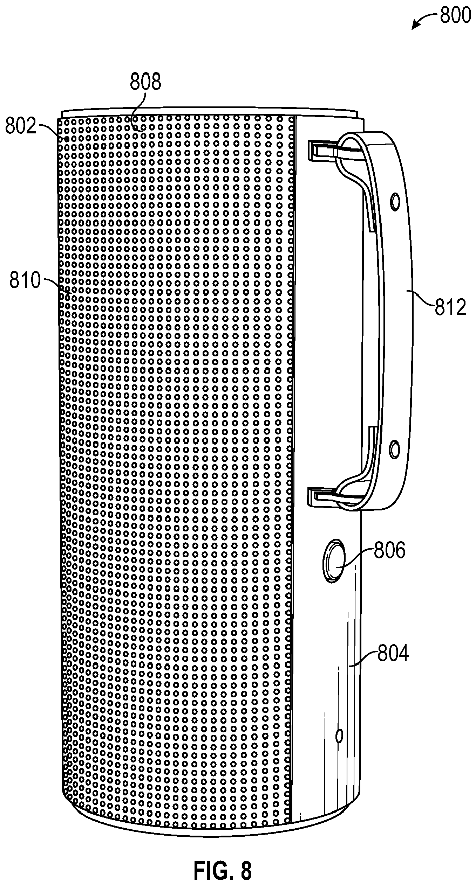

A practical example of this functionality is as follows. The portable wireless speaker 200 is cradled within the cavity 112 of the auxiliary base unit 100. The portable wireless speaker 200 is initially within range of the primary WLAN network of the router 300 and is drawing data from the primary WLAN network to stream a song. The volume of playback is being enhanced by the auxiliary speaker 210 of the auxiliary base unit 100, even while the auxiliary base unit 100 is recharging the portable wireless speaker 200 via the battery 107 and/or the power cord 109. A user picks up the auxiliary base unit 100 (e.g., via a handle such as a handle 812 of FIG. 8), which still contains the portable wireless speaker 200, and proceeds to walk out of range of the primary WLAN network. Playback of the song being streamed through the primary WLAN speaker stops. The control circuitry 155 of the auxiliary base unit 100 detects the unexpected halt in audio output from the portable wireless speaker and/or detects a lack of signal from the router 300 and subsequently switches on the communication module 150. A wireless connection is made between the long-range transceiver 152 and the cell tower 500, and the short-range transceiver 154 broadcasts a corresponding mobile hotspot that is detected by the portable wireless speaker 200. The portable wireless speaker 200 switches its connection over to the mobile hotspot via the control device 400, requests to resume the data stream needed to play the song via the mobile hotspot, and picks up where it left off prior to leaving the communication range of the router 300. The user experiences only a slight gap in playback and is otherwise unaware of and/or uninvolved with the steps performed to switch over to the mobile hotspot.

In some examples, it is preferable to disable the communication module 150 when the mobile hotspot is not being utilized to reduce power consumption of the auxiliary base unit 100. Accordingly, should the user bring the auxiliary base unit 100 and the portable smart speaker 200 back into the communication range of the router 300, the data connection switches back to the primary WLAN of the router 300 and the control circuitry 155 of the auxiliary base unit 100 deactivates the communication module 150. Detecting the availability of the primary WLAN source may be done by the portable wireless speaker 200 and/or the short-range transceiver 154 of the auxiliary base unit 100. In the former case, the control circuitry 155 of the auxiliary base unit 100 recognizes when there is no longer any device(s) connected with the mobile hotspot and subsequently triggers the shutdown of the communication module 150. In the latter case, the auxiliary base unit 100 recognizes another suitable WLAN connection and proactively shuts down the communication module 150 to stop transmission of the mobile hotspot. The loss of connection with the mobile hotspot triggers the portable wireless speaker 200 to seek other networks, at which point the portable wireless speaker 200 finds the primary WLAN source network and reconnects to it. In some instances, the latter case may be less optimal because it causes another brief gap in playback and/or performance, while the former case does not.

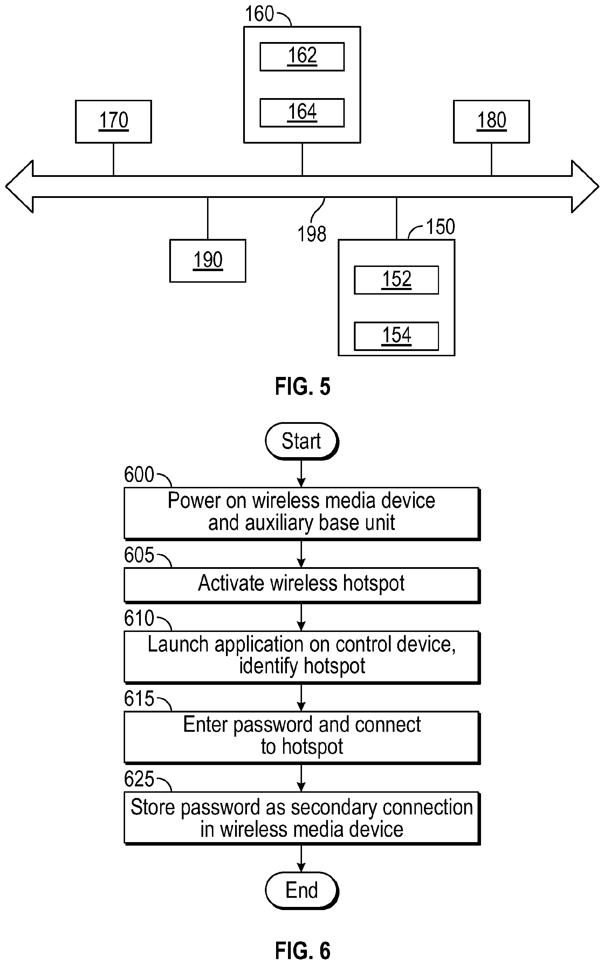

FIG. 5 illustrates an internal communication flow chart / block diagram of example components of the auxiliary base unit 100, in accordance with the present invention. Element 198 represents a communication connection (e.g., a universal serial bus connection) that communicatively connects the various modules and electrical components of the auxiliary base unit 100. One of skill in the art will understand that a universal serial bus is expandable and may have more or less connections as functionality is added or removed. As depicted, the auxiliary base unit 100 also has a control module 160 that contains memory 162 and a processor or controller 164 (e.g., that is and/or includes the control circuitry 155). The memory 162 is configured to store data associated with the function(s) of the auxiliary base unit 100 and/or data received from a wireless network (e.g., a WLAN, a cellular network) and/or the portable wireless speaker 200. Such data may be accessible to portable wireless speaker 200 when no wireless connections are available (or at other times). The memory 162 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and/or high-capacity storage devices (e.g., hard drives, solid state drives, etc.). In some examples, the memory 162 includes multiple kinds of memory, particularly volatile memory and non-volatile memory. The processor 164 executes software to control activities of the other modules based on a variety of inputs. The processor 164 may be any suitable processing device or set of processing devices such as, but not limited to, a microprocessor, a microcontroller-based platform, an integrated circuit, one or more field programmable gate arrays (FPGAs), and/or one or more application-specific integrated circuits (ASICs).

The memory 162 is computer readable media on which one or more sets of instructions, such as the software for operating the methods of the present disclosure, can be embedded. The instructions may embody one or more of the methods or logic as described herein. For example, the instructions reside completely, or at least partially, within any one or more of the memory 162, the computer readable medium, and/or within the processor 164 during execution of the instructions.

The terms "non-transitory computer-readable medium" and "computer-readable medium" include a single medium or multiple media, such as a centralized or distributed database, and/or associated caches and servers that store one or more sets of instructions. Further, the terms "non-transitory computer-readable medium" and "computer-readable medium" include any tangible medium that is capable of storing, encoding or carrying a set of instructions for execution by a processor or that cause a system to perform any one or more of the methods or operations disclosed herein. As used herein, the term "computer readable medium" is expressly defined to include any type of computer readable storage device and/or storage disk and to exclude propagating signals.

The communication module 150 (previous discussed) of the illustrated example contains the long-range transceiver 152 and the antenna 154 for broadcasting a mobile hotspot. The example components of the illustrated example also includes a lighting module 170, a power module 180, and an audio module 190. While not limiting, these modules 170, 180, 190 each operate functions of the auxiliary base unit 100 associated with its supporting role to portable wireless speaker 200. The power module 180 includes the battery 107 and the power cord 109 and is configured to supply auxiliary power (e.g., auxiliary battery power) to power and/or recharge a battery within the portable wireless speaker 200. For example, the power module 180 is controlled by the control module 160 based on input data, such as data regarding the power draw of the portable wireless speaker 200 when the power plug 130 is inserted into the power port 205.

The audio module 190 of the illustrated example includes the auxiliary speaker 210 that provides enhanced audio output with the portable wireless speaker 200. Operation of the audio module 190 is controlled by the control module 160, for example, in response to the detection of audio output from the portable wireless speaker 200. Similarly, the lighting module 170 of the illustrated example operates to enhance visual output from the portable wireless speaker 200. Alternatively or additionally, the lighting module 170 includes the LED lights 108 and/or operates the LED lights 108 based on instructions sent from the control module 160. For example, the LED lights 108 identify the power level of the auxiliary base unit 100, the power level of the portable wireless speaker 200, the bandwidth(s) of available WLAN connection(s), and/or the operational state of the communication module 150 (e.g., whether it is on or off). It will be understood that the physical components of each of the modules 150, 160, 170, 180, 190 depicted in FIG. 5 can be packaged conveniently within the battery housing 105 and/or other area of the auxiliary base unit 100.

FIG. 6 is a flowchart illustrating the steps associated with setting up a portable media device (e.g., the portable wireless speaker 200) to operate with the auxiliary base unit 100 in a location remote from a primary WLAN source, according to certain embodiments. The flowchart of FIG. 6 is representative of machine readable instructions that are stored in memory (such as the memory 162 of FIG. 5) and include one or more programs that are executed by a processor (such as the processor 164 of FIG. 6). While the example program is described with reference to the flowchart illustrated in FIG. 6, many other methods for setting up operation of a portable media device with the auxiliary base unit 200 may alternatively be used. For example, the order of execution of the blocks may be rearranged, changed, eliminated, and/or combined.

At step 600, a user powers on the portable wireless speaker 200 and the auxiliary unit 100. At step 605, the user activates the mobile hotspot of the auxiliary base device 100. For example, the user activates the hotspot via a a manual control input device such as a button (not shown) on the auxiliary base unit 100 and/or of the control device 400, by remote software, and/or by removing the auxiliary base unit 100 from wireless coverage of a primary WLAN. To activate the hotspot, the communication module 150 makes a connection with the remote cell tower 500 to establish communication (e.g., cellular communication) with a network (e.g., the Internet). At block 610, the user launches an application on the control unit 400 that enables the user to control the portable wireless speaker 200. For example, upon launching the application, the control unit 400 identifies the mobile hotspot broadcasted by the short-range transceiver 154. At block 615, the user enters a password via the control device 400 that is sent to the auxiliary base unit 100 on behalf of the portable wireless speaker 200 to connect the portable wireless speaker 200 to the mobile hotspot of the auxiliary base unit 100. For example, the control module 160 authorizes the portable wireless speaker 200 to access the hotspot of the auxiliary base unit 100 in response to receiving a password, a service set identifier, and/or any other requisite code from the control device 400 on behalf of the portable wireless speaker 200. At step 625, the portable wireless speaker 200 stores the password and/or other information (e.g., a service set identifier) necessary to connect to the mobile hotspot broadcast by the auxiliary base unit 100 for later use. For example, this information for the mobile hotspot would be in addition to credentials stored for the primary WLAN connection (e.g., of the router 300).

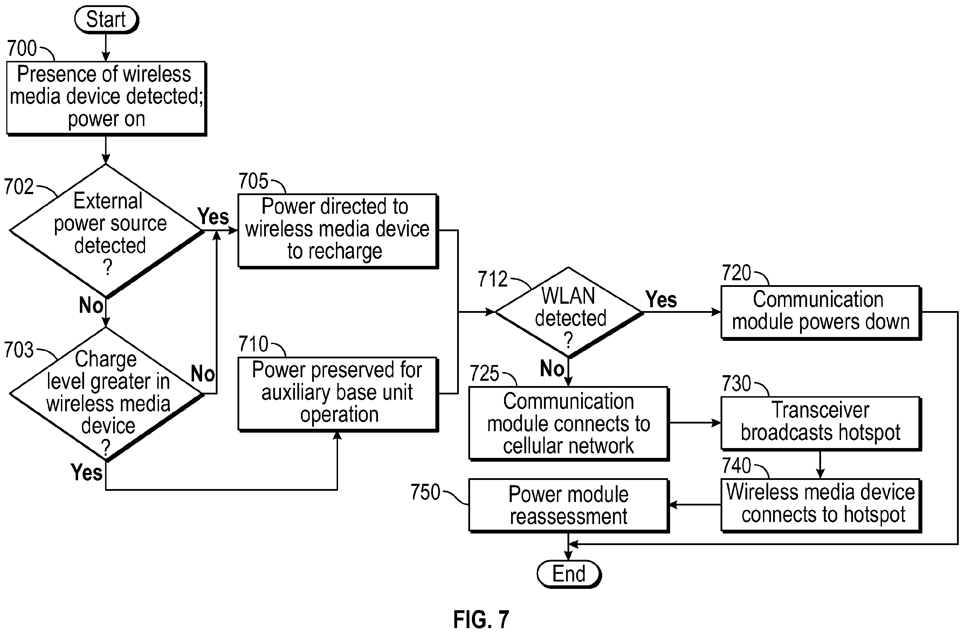

FIG. 7 is a flowchart illustrating the steps of operating the auxiliary base unit 200 after a portable media device (e.g., the portable wireless speaker 200) is set up to operate with the auxiliary base unit 200 (e.g., after the setup steps of FIG. 6 have been completed). The flowchart of FIG. 7 is representative of machine readable instructions that are stored in memory (such as the memory 162 of FIG. 5) and include one or more programs that are executed by a processor (such as the processor 164 of FIG. 6). While the example program is described with reference to the flowchart illustrated in FIG. 6, many other methods for operating the auxiliary base unit 200 may alternatively be used. For example, the order of execution of the blocks may be rearranged, changed, eliminated, and/or combined.

First, at step 700, the control module 160 of the auxiliary unit 100 detects an installation of portable wireless speaker 200 within the cavity 112 of the primary device housing 110 and connection to the power plug 130. In turn, the control module 160 causes itself to "waken" into an active mode. At decision point 702, the control module 160 detects, via a power sensor, whether the power module 180 is connected to an external power source. That is, the control module 160 determines whether the power cord 109 of the auxiliary base unit 100 is plugged into an electrical socket. If so, the method proceeds to step 705 at which the control module 160 causes the power module 180 to direct power to the portable wireless speaker 200 to power operation of the portable wireless speaker 200 and/or to recharge a battery of the portable wireless speaker 200. If not, the method proceeds to decision point 703 at which the control module 160 determines whether a charge level of a battery of the portable wireless speaker 200 is greater than a charge level of the battery 107 of the auxiliary base unit 100. In some examples, the power module 180 determines whether the power reserve in the auxiliary base unit 100 is greater or less than that of the portable wireless speaker 200 base upon settings and decisions of the control module 160. In some embodiments, the control module 160 makes this determination based on which device will run out of power first, given its level of reserve and current usage. In such embodiments, the decision may be revisited as power draws change for the auxiliary base unit 100 and/or the portable wireless speaker 200. If the charge level of the portable wireless device 200 is greater than that of the auxiliary base unit 100, the method proceeds to step 705 at which the power module 180 of the auxiliary base unit 100 distributes power of the battery 107 to the portable wireless device 200. Additionally or alternatively, the power module 180 of the auxiliary base unit 100 distributes power of the battery 107 to the portable wireless device 200 upon determining that the charge level of the battery 107 is greater than a predetermined threshold level. If the charge level of the portable wireless device 200 is not greater than that of the auxiliary base unit 100, the method proceeds to step 710 at which the power module 180 preserves the power of the battery 107 for operation of the auxiliary base unit 100 and causes the portable wireless speaker 200 to operate using its own battery.

At decision point 712, the communication module 150 checks for a primary WLAN source of the portable wireless speaker 200. Additionally or alternatively, this step is performed by the portable wireless speaker 200, which then sends signal(s) to the auxiliary unit 100 indicating whether the signal of the primary WLAN source is not available or too weak. If the primary WLAN connection is available, the method proceeds to step 720 at which the control module deactivates the communication module 150 shuts to preserve power. If the primary WLAN connection is not detected or is below a predetermined signal strength threshold, the method proceeds to step 725 at which the communication module searches for a signal of the cell tower 500. Once located, the communication module 150 establishes a connection using the long-range transceiver 152. At step 730, the communication module 150 broadcasts the wireless hotspot via the short-range transceiver 154. At step 740, a wireless data connection is made between the portable wireless speaker 200 and the auxiliary base unit 100 via the auxiliary hotspot of the auxiliary base unit 100. Finally, at step 750, the control module 150 reassesses whether the power module should continue to direct power to the portable wireless speaker 200, if it is doing so. For example, the original decision at decision point 703 might be simply based on which device has more reserved power. As the power draw of the auxiliary unit 100 increases through operation of the communication module 150, more power may be preserved by the power module 180 and/or less power may be directed to portable wireless speaker 200.

Accordingly, it should now be clear how the present invention enhances the performance, range and other capabilities of a wireless media device. Once again, it will be understood that additional enhancements could be provided, depending on the functional capabilities of the wireless media device. The invention allows for essentially uninterrupted usage of a wireless media device, regardless of the proximity to a designated home or office WLAN system. Any process descriptions or blocks in the figures, such as those of FIGS. 6 and 7, should be understood as representing modules, segments, or portions of code which include one or more executable instructions for implementing specific logical functions or steps in the process, and alternate implementations are included within the scope of the embodiments of the present invention in which functions may be, in some cases, executed out of order from that shown or discussed, including substantially concurrently, depending on the functionality involved, as would be understood by those having ordinary skill in the art.

FIG. 8 illustrates a side view of another exemplary auxiliary base unit 800, in accordance with a particular embodiment of the present invention. As illustrated in FIG. 8, the auxiliary base unit 800 includes a body 802, a battery housing 804, a power button 806, a primary device housing 808, and a mesh body 810. The body 802, the battery housing 804, the power button 806, the primary device housing 808, and the mesh body 810 of the auxiliary base unit 800 of FIG. 8 include features that are substantially similar and/or identical to those of the body 102, the battery housing 105, the power button 106, the primary device housing 110, and the mesh body 112 of the auxiliary base unit 100 of FIGS. 1-2 and 4. Because those features of the auxiliary base unit 100 are describe in detail in connection with FIGS. 1-2 and 4, those features of the auxiliary base unit 800 of FIG. 8 are not detailed below in further detail.

As illustrated in FIG. 8, the body 802 of the auxiliary base unit 800 is substantially cylindrical. The body 802 is elongated such that a height of the auxiliary base unit 800 is significantly greater than a diameter or width of the auxiliary base unit 800. In the illustrated example, a handle 812 is coupled to the body 802 of the auxiliary base unit 800 that enables a user to user grasp, pick up, and/or carry the auxiliary base unit 800. For example, the handle 812 is detachable from the body 802. In other examples, the handle 812 is integrally formed with the body 802.

It should be emphasized that the above-described exemplary embodiments of the present invention, and particularly any "preferred" embodiments, are possible examples of implementations, merely set forth for a clear understanding of the principles of the invention. Many other variations and modifications may be made to the above-described embodiments of the invention without substantially departing from the spirit and principles of the invention. All such modifications are intended to be included herein within the scope of this disclosure and the present invention and protected by the following claims.

The application is also to be taken to extend to the following set of numbered statements:
1. An auxiliary base unit for a wireless media device, the auxiliary base unit comprising:
   a body defining a cavity configured to house the wireless media device;
   a communication module configured to generate a wireless hotspot, the communication module including:
      a cellular transceiver for cellular communication; and
      a wireless local area network (WLAN) transceiver to generate the wireless hotspot for communication with the wireless media device; and
   a power module configured to charge the communication module.
2. The auxiliary base unit of statement 1, wherein the cavity defined by the body is cylindrical and provides access to controls on a top surface of the wireless media device when the wireless media device is housed in the cavity.
3. The auxiliary base unit of statement 1, wherein a portion of the body includes a mesh body to facilitate projection of audio signals from the wireless media device when the wireless media device is positioned within the cavity defined by the body.
4. The auxiliary base unit of statement 1, further including an auxiliary speaker to supplement the wireless media device.
5. The auxiliary base unit of statement 4, further including an auxiliary port that is electrically coupled to the auxiliary speaker and configured to electrically couple to the wireless media device when the wireless media device is positioned within the cavity, wherein the auxiliary speaker supplements the wireless media device when the auxiliary port is electrically coupled to the wireless media device.
6. The auxiliary base unit of statement 1, wherein the WLAN transceiver is a Wi-Fi transceiver and the wireless hotspot is a Wi-Fi hotspot.
7. The auxiliary base unit of statement 1, further including a power connector that is electrically coupled to the power module and configured to electrically couple to the wireless media device when the wireless media device is positioned within the cavity.
8. The auxiliary base unit of statement 1, wherein the power module includes a power cord and a rechargeable battery.
9. The auxiliary base unit of statement 1, wherein to generate the wireless hotspot, the cellular module communicatively connects to a remote cell tower and the WLAN module broadcasts a WLAN signal.
10. The auxiliary base unit of statement 1, further including a controller configured to authorize the wireless media device to access the wireless hotspot in response to receiving a code from a mobile device on behalf of the wireless media device.
11. The auxiliary base unit of statement 10, wherein the wireless hotspot generated by the WLAN module facilitates wireless communication for the wireless media device that is independent of communication with the mobile device.
12. The auxiliary base unit of statement 1, further including a wired data connector that is communicatively coupled to the communication module and is configured to couple to the wireless media device when the wireless media device is housed in the cavity.
13. The auxiliary base unit of statement 1, wherein the WLAN transceiver generates the wireless hotspot upon receiving an activation signal via a button.
14. An auxiliary base unit for a wireless media device, the auxiliary base unit comprising:
   a body defining a cavity configured to house the wireless media device;
   a communication module configured to generate a wireless hotspot;
   a power module configured to charge the communication module; and
   a controller configured to:
      monitor, via the communication module, for a primary WLAN source of the wireless media device;
      generate, via the communication module, the wireless hotspot in response to
   not detecting the primary WLAN source of the wireless media device; and communicate with the wireless media device via the wireless hotspot.
15. A computer storage medium comprising instructions which, when executed, cause an auxiliary base unit that is configured to house a wireless media device to:
   activate, via a processor, a cellular transceiver of the auxiliary base unit for communication with a cellular network via a remote cell tower;
   activate, via the processor, a wireless local area network (WLAN) transceiver for WLAN communication;
   monitor, via the WLAN transceiver, for a primary WLAN source of the wireless media device;
      generate, via the WLAN transceiver, a wireless hotspot in response to not detecting the primary WLAN source of the wireless media device; and
      communicate with the wireless media device via the wireless hotspot.
16. The computer storage medium of statement 15, wherein the instructions cause the WLAN transceiver to generate the wireless hotspot further in response to receiving an activation signal via at least one of a button of the auxiliary base unit and a mobile device communicatively coupled to the WLAN transceiver.
17. The computer storage medium of statement 15, wherein the instructions further cause the auxiliary base unit to authorize the wireless media device to access the wireless hotspot in response to receiving a code from a mobile device on behalf of the wireless media device.
18. The computer storage medium of statement 15, wherein the instructions further cause the auxiliary base unit to power the wireless media device via a power cord of the auxiliary base unit when the wireless media device is electrically coupled to a power connector of the auxiliary base unit and the power cord is plugged into a socket.
19. The computer storage medium of statement 18, wherein the instructions further cause the auxiliary base unit to power the wireless media device via a rechargeable battery of the auxiliary base unit when the wireless media device is electrically coupled to a power connector of the auxiliary base unit, the power cord is not plugged into the socket, and a charge level of the rechargeable battery is greater than that of the portable wireless media device.
20. The computer storage medium of statement 15, wherein the instructions further cause the auxiliary base unit to deactivate the cellular transceiver and the WLAN transceiver in response to the WLAN transceiver detecting another WLAN source for the wireless media device.

It should be taken that each of the statements dependent on statement 1 are equally applicable to and may be rewritten to depend on statement 14 unless the features featured in the dependent statement are already present in statement 14 or are contradicted.

## Claims

1. An auxiliary base unit for a wireless media device, the auxiliary base unit comprising:
a body defining a cavity configured to house the wireless media device;
a communication module configured to generate a wireless hotspot, the communication module including:
a cellular transceiver for cellular communication; and
a wireless local area network (WLAN) transceiver to generate the wireless hotspot for communication with the wireless media device; and
a power module configured to charge the communication module.

2. The auxiliary base unit of claim 1, wherein the cavity defined by the body is cylindrical and provides access to controls on a top surface of the wireless media device when the wireless media device is housed in the cavity.

3. The auxiliary base unit of claim 1 or claim 2, wherein a portion of the body includes a mesh body to facilitate projection of audio signals from the wireless media device when the wireless media device is positioned within the cavity defined by the body.

4. The auxiliary base unit of any preceding claim, further including an auxiliary speaker to supplement the wireless media device.

5. The auxiliary base unit of claim 4, further including an auxiliary port that is electrically coupled to the auxiliary speaker and configured to electrically couple to the wireless media device when the wireless media device is positioned within the cavity, wherein the auxiliary speaker supplements the wireless media device when the auxiliary port is electrically coupled to the wireless media device.

6. The auxiliary base unit of any preceding claim, wherein the WLAN transceiver is a Wi-Fi transceiver and the wireless hotspot is a Wi-Fi hotspot.

7. The auxiliary base unit of any preceding claim, further including a power connector that is electrically coupled to the power module and configured to electrically couple to the wireless media device when the wireless media device is positioned within the cavity.

8. The auxiliary base unit of any preceding claim, wherein the power module includes a power cord and a rechargeable battery.

9. The auxiliary base unit of any preceding claim, wherein to generate the wireless hotspot, the cellular module communicatively connects to a remote cell tower and the WLAN module broadcasts a WLAN signal.

10. The auxiliary base unit of any preceding claim, further including a controller configured to authorize the wireless media device to access the wireless hotspot in response to receiving a code from a mobile device on behalf of the wireless media device, optionally wherein the wireless hotspot generated by the WLAN module facilitates wireless communication for the wireless media device that is independent of communication with the mobile device.

11. The auxiliary base unit of any preceding claim, further including a wired data connector that is communicatively coupled to the communication module and is configured to couple to the wireless media device when the wireless media device is housed in the cavity.

12. The auxiliary base unit of any preceding claim, wherein the WLAN transceiver generates the wireless hotspot upon receiving an activation signal via a button.

13. A computer storage medium comprising instructions which, when executed, cause an auxiliary base unit that is configured to house a wireless media device to:
activate, via a processor, a cellular transceiver of the auxiliary base unit for communication with a cellular network via a remote cell tower;
activate, via the processor, a wireless local area network (WLAN) transceiver for WLAN communication;
monitor, via the WLAN transceiver, for a primary WLAN source of the wireless media device;
generate, via the WLAN transceiver, a wireless hotspot in response to not detecting the primary WLAN source of the wireless media device; and
communicate with the wireless media device via the wireless hotspot.

14. The computer storage medium of claim 12, wherein:
a) the instructions cause the WLAN transceiver to generate the wireless hotspot further in response to receiving an activation signal via at least one of a button of the auxiliary base unit and a mobile device communicatively coupled to the WLAN transceiver, or
b) the instructions further cause the auxiliary base unit to authorize the wireless media device to access the wireless hotspot in response to receiving a code from a mobile device on behalf of the wireless media device.

15. The computer storage medium of claim 13 or claim 14, wherein:
a) the instructions further cause the auxiliary base unit to power the wireless media device via a power cord of the auxiliary base unit when the wireless media device is electrically coupled to a power connector of the auxiliary base unit and the power cord is plugged into a socket,
b) the instructions further cause the auxiliary base unit to power the wireless media device via a rechargeable battery of the auxiliary base unit when the wireless media device is electrically coupled to a power connector of the auxiliary base unit, the power cord is not plugged into the socket, and a charge level of the rechargeable battery is greater than that of the portable wireless media device, or
c) the instructions further cause the auxiliary base unit to deactivate the cellular transceiver and the WLAN transceiver in response to the WLAN transceiver detecting another WLAN source for the wireless media device.
